(19) **Europäisches Patentamt**
**European Patent Office**
**Office européen des brevets**

(11) **EP 4 336 381 A1**

(12) **EUROPEAN PATENT APPLICATION**

(43) Date of publication:
**13.03.2024 Bulletin 2024/11**

(21) Application number: **22194930.8**

(22) Date of filing: **09.09.2022**

(51) International Patent Classification (IPC):
**G06F 16/683** (2019.01)

(52) Cooperative Patent Classification (CPC):
**G06F 16/683**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Sparwk AS**
**7010 Trondheim (NO)**

(72) Inventors:
• **Liang, Beici**
**7014 Trondheim (NO)**
• **Suk Choi, Jin**
**10390 Goyang, Gyeonggi (KR)**
• **Jenssen, Robin**
**11137 Stockholm (SE)**

(74) Representative: **Onsagers AS**
**P.O. Box 1813 Vika**
**0123 Oslo (NO)**

(54) **SYSTEM AND METHOD FOR MUSIC ENTITY MATCHING**

(57) A method and system for matching music related entities, and more specifically to automatically linking a sound recording with the underlying musical work for matching the related music rights holders to the corresponding real-world entities. The method is executed in a music entity matching system running on a computing device. In implementations of matching music related entities, the music entity matching system receives musical audio recordings from the first and the second audio source. Audio data are then extracted from the corresponding audio files, and creator name data are extracted from the metadata. The extracted audio data are compared and pairs of candidates from each source are linked based on similarity. Music entities from each linked pair are then compared for determining and presenting a final matching result of the rights holders of musical audio recordings.

Fig. 2

## Description

TECHNICAL FIELD

The present disclosure relates to a method and system for matching music related entities, and more specifically to automatically linking a sound recording with the underlying musical work in order to match the related music rights holders to the corresponding real-world entity.

BACKGROUND

In the music industry, with the digital market for content creation and streaming expanding rapidly, it is crucial that music copyrights are managed with accurately registered entity records stored in different languages and databases. When a piece of music is created and recorded, the corresponding musical work and sound recording are each given unique identifiers, called an International Standard Musical Works Code (ISWC) and International Standard Recording Code (ISRC), respectively. This is to help authenticate and distinguish them from others and catalogue the relevant rights holders, who are also assigned with unique identifiers such as Interested Party Information (IPI) and International Standard Name Identifier (ISNI) numbers.

Digital Services Providers (DSPs) such as Spotify and YouTube hold the audio files and metadata with ISRC of sound recordings for streaming services. They can promptly pay the recording royalties to the artists associated with the sound recordings via their record labels or distributors. However, DSPs don't necessarily hold a complete dataset for the musical works, i.e., the underlying composition of the sound recordings. Such a dataset requires data of musical works with ISWCs, their corresponding creators with unique identifiers, and the links between ISWCs and ISRCs. With this information, publishing royalties can be paid to the music creators correctly.

Publishing royalties owed to the creators, such as songwriters and composers, have to be collected according to the music usage log from DSPs by the collecting societies such as Collective Management Organisation (CMOs). Since then, a large amount of publishing royalties owed to creators have been misallocated or consigned as unclaimed or non-attributable royalties. This is mainly due to mismatched, incomplete or missing data in the existing collecting societies databases that fail to link ISRC with ISWC. This further creates obstacles to identify the copyright owners associated with the ISWC. The societies and copyright owners need to manually reconcile the registration information with each other if they find any incorrect or incomplete data. This results in delays to publishing royalties for months or even years.

Entity Matching (EM), also known as entity resolution, record linkage, or reference reconciliation aims to address the problem of recognizing data records that refer to the same real-world entity, e.g. a person. It can also loosely refer to the broader problem of determining whether two possibly heterogeneous representations of different entities should be associated together. To decide whether two records match or not, features are extracted from the two records to measure the similarity between them.

Traditionally, textual features are carefully handcrafted for rule-based matching, which requires domain knowledge. In recent years, deep learning methods for natural language processing (NLP) have been used to automatically learn the features for semantic textual similarity measurement, e.g. Katakis, N. and Vikatos, P. "Entity Linking of Sound Recordings and Compositions with Pre-trained Language Models."; Proceedings of the 17th International Conference on Web Information Systems and Technologies (WEBIST 2021), pages 474-481. Here, pre-trained language models were used to represent metadata (music title, artist name, and creator name) of sound recordings and compositions as feature vectors. Similarities between these feature vectors were estimated for linking recordings to their compositions.

A more detailed survey on how deep learning-based NLP methods have been used for entity matching can be seen in Barlaug, N. and Gulla, J.A. "Neural networks for entity matching: A survey."; ACM Transactions on Knowledge Discovery from Data (TKDD) 15.3 (2021): 1-37.

With the accessibility of different formats of data, multimodal EM becomes an emerging field in which the disambiguation between records can be improved by adding a visual and/or audio context. For example, both semantic textual and visual information has been leveraged to figure out a name mentioned in a Twitter post refers to which user account of a real-world entity. This is disclosed in Adjali, Omar, et al. "Multimodal entity linking for tweets." European Conference on Information Retrieval. Springer, Cham, 2020.

In the music industry, existing EM systems employed by CMOs mainly rely on usage log metadata from DSPs to match sound recordings with musical works in publishers' repertoire and available catalogues. This provides the basis for the identification of music creators who should be paid with the publishing royalties of the matched musical works.

The employed EM methods may be able to deal with issues in linguistic variations of a certain language to some extent, but they are still unable to link candidate entity pairs across different languages. In terms of using audio materials as additional information, audio fingerprints or watermarks calculated from the audio materials can be used. While robust against background noise and signal distortions, they are designed to be highly sensitive to a particular version of a piece of music, hence only suitable for identifying a specific sound recording, such as the music identification service provided by Shazam as disclosed in US 6990453 B2.

A system is needed to automate the process of matching music related entities, hence benefiting the remuneration of rights holders and especially music creators.

The example embodiments according to the invention provide a novel audio feature representing the harmonic progression in a given audio recording. By measuring the similarity between the proposed audio features corresponding to musical works and the ones corresponding to sound recordings, a musical work can be linked to multiple sound recordings, including different performances of the same piece, cover songs, and the like. According to the metadata associated with the linked music works and sound recordings, language models are used to complement the EM of music rights holders.

SHORT DESCRIPTION OF THE INVENTION

The invention is defined by a method for matching music related entities of musical audio recordings received from a first and a second audio source, where the musical audio recordings comprise metadata and corresponding audio files, the method is executed in a music entity matching system running on a computing device. The method comprises:

- receiving the musical audio recordings from the first and the second audio source and extracting audio data from the corresponding audio files, and creator name data from the metadata,

- generating, in an audio model module, audio feature vectors of the audio files of the first and second audio source, and generating, in a language model module, textual feature vectors of the creator name data,

- comparing, in a linking candidate generation module, the generated audio feature vectors of the first and second audio source,

- determining, based on similarity comparison of audio feature vectors generated from the first and second audio source, linking candidates with similarity to be included in a list of musical audio recordings,

- retrieving, in an entity retrieval module, music entities associated with the musical audio recordings from the metadata of the linking candidates,

- comparing, in a decision module, textual feature vectors of each pair of linking candidates and from this, determining a plurality of matching entities to form a final matching result of the right holders of musical audio recordings,

- presenting, on a user interface, information of the music entities of the final matching result of the right holders of musical audio recordings received from the first and a second audio source.

In one embodiment, the musical audio recording received from the first audio source is a derivative version of an original musical work, and the audio recording received from the second audio source is the original musical work. In this embodiment, cover songs of an original work will be matched with the original work, and royalties can be shared accordingly.

In another embodiment, the musical audio recording received from the first audio source is from a first music catalogue, and the musical audio recording received from the second audio source is from a second music catalogue, where the music catalogues comprise metadata related to the musical audio recordings. In this embodiment, entities of music rights holders listed in the two music catalogues can be matched.

In one embodiment, the entities of the textual feature vectors forming the final matching result comprise creator name data and real-world entities of creators and are determined as a match by using a binary classifier.

In one embodiment, the audio feature vectors are generated by a deep neural network trained for audio-based music identification. This will process a time sequence of a music file, such as a waveform, or a two-dimensional representation of the music file, such as a spectrogram, and generates the audio feature vector in an audio vector space.

In one embodiment, the textual feature vectors are generated from text-based information by a deep neural network-based language model. This will capture the semantic and contextual understanding of the text.

The present invention is further defined by a music matching system for matching music related entities of musical audio recordings received from a first and a second audio source, where the musical audio recordings comprise metadata and corresponding audio files.

The invention is also defined by a computer program product that when executed by a computing device performs the method above for matching music related entities of musical audio recordings received from a first and a second audio source, where the musical audio recordings comprise metadata and corresponding audio files.

The system comprises a computing device adapted for performing the entity matching when executing a music entity matching program. the system further comprises:

- user interface modules for receiving the musical audio recordings from the first and the second audio source and extracting audio data from the corresponding audio files, and creator name data from the metadata,

- an audio model module generating audio feature vectors of the audio files of the first and second audio source, and a language model module generating textual feature vectors of the creator name data from the metadata,

- a linking candidate generation module for performing similarity comparison of the generated audio feature vectors of the first and second audio source, and determining, based on the similarity comparison of audio feature vectors generated from the first and second audio source, linking candidates with similarity to be included in a list of musical audio recordings,

- an entity retrieval module for retrieving music entities associated with the musical audio recordings from the metadata of the linking candidates,

- a decision module for comparing textual feature vectors of each pair of linking candidates and from this, determining a plurality of matching entities to form a final matching result of the right holders of musical audio recordings,

- a user interface module connected to a on a user interface for presenting information of the music entities of the final matching result of the right holders of musical audio recordings received from the first and a second audio source.

DETAILED DESCRIPTION

The invention will now be described by examples and with reference to the accompanying figures illustrating an embodiment of the invention. These figures are provided to facilitate the understanding of the disclosed technology and shall not be considered limiting of the breadth, scope, or applicability thereof.

Figure 1a - 1b illustrate a digital medium environment in an example implementation that is operable to employ techniques described herein.

Figure 2 illustrates an example system usable for linking a sound recording to the underlying composition of a musical work using audio models, and accordingly matching the creator name mentioned in the sound recording with the entity record of the music creator associated with the linked musical work using language models in accordance with one or more aspects of the disclosure.

Figure 3 illustrates a flow diagram depicting an example procedure in accordance with matching a composer name mentioned in a sound recording with the real-world entity of the music creator.

The following terms are used throughout the disclosure. The descriptions of these terms are by way of example, and not limitation.

Music creator - is a catch-all term referring to composers, lyricists, producers, and other roles involved in the creation process of a musical work.
Music artist - is a catch-all term referring to performing musicians, bands, and other roles involved in the production process of a sound recording.
Music rights holder - is a catch-all term referring to persons and organisations involved in the music value chain, which starts with the creation of a musical work and ends with the distribution of the corresponding sound recordings.
Musical work - describes the underlying music composition and production, comprising melody, lyrics, and other music content created by music creators. Right owners of a musical work usually include its composers, lyricists, publishers and so on.
Sound recording - describes the resulting creation when a musical work is performed, recorded, mixed and mastered. Right owners of a sound recording usually include its performing musicians, record labels, and so on. Multiple sound recordings can be based on one musical work, for example, cover songs.
Metadata - for music is a collection of information that pertains to a music entity. Metadata can include descriptive information, which details the contents of a musical work or a sound recording, such as the title, album, track number, and so on. Metadata can also include ownership information, which details the creators, the artists, their corporate partners, the contractual terms agreed by them, and so on.
Textual feature vector - describes a vector generated from text-based information to capture the semantic and contextual understanding of the text. A textual feature vector can be generated with a deep neural network-based language model that serialises the text input and generates the textual feature vector in a textual vector space.
Audio feature vector - describes a vector generated from a music audio recording that represents characteristics of music content. An audio feature vector can be generated with a deep neural network based audio model that processes a time sequence of a music file, such as a waveform, or a two-dimensional representation of the music file, such as a spectrogram, and generates the audio feature vector in an audio vector space.
Vector space - describes a space in which vectors of real-valued numbers (such as audio feature vectors of audio recordings) belong. A vector of a vector space can be added to another vector in the vector space, and the result belongs to the vector space. A vector of a vector space can also be multiplied by a real-valued scalar, and the result belongs to the vector space. The vector space can include any suitable number of dimensions.
Distance - describes a norm of a difference between feature vectors. It indicates a matching degree between music entities represented by the feature vectors.
Distance similarity threshold - describes a numerical threshold that can be used to determine if two music entities are similar or not.

The present invention describes systems, devices, and techniques for matching music related entities. As discussed above, collecting societies, who are responsible to pay publishing royalties to various parties based on music usage, rely on usage log metadata from DSPs to match sound recordings with the musical works within publishers' repertoire and available catalogues. Metadata often contains linguistic variations of entities in titles and names (e.g., misspellings, missing terms, acronyms, etc.), which complicates the matching process. This results in misallocated and unclaimed royalties. The embodiments described herein automate the process of identifying the links between sound recordings and musical works using audio models, and then match the names of music creators mentioned in the sound recordings with the real-world entities associated with the linked musical works using language models.

The following non-limiting example is provided to introduce a certain embodiment of the invention. In this example, a music entity matching system can access the following:

> 1) a collection of sound recordings, including their metadata with ISRC, audio file, and credits of related musical work such as a list of songwriters' names, but lack the links between ISRC and ISWC;
>
> 2) a collection of musical works, including their metadata with ISWC, audio file, related sound recording data if they exist; and
>
> 3) information of the music creators associated with the collection of musical works. Information of the music creators include their unique identifiers and form the data records of the real-world entities.

The music entity matching system can provide a user interface for registering music creators, which can store their personal information (e.g., legal name, alias, identifiers, etc.), upload their music works, and store the corresponding metadata, audio files, and other related information. The registered information is the single source of truth to construct entity records of music creators and musical works. The music entity matching system can also provide a user interface for receiving data from DSPs, consisting of sound recordings which need to be linked with the corresponding musical works. Metadata, audio files, and other related information of these sound recordings are stored and will be used to match mentioned names with entities of music creators registered in the music entity matching system.

On this basis, the following definitions are used to formulate the problems that can be solved by the music entity matching system:

- an entity e corresponds to a music creator named u (generally associated with a person or a group);

- a mention $m_i$ corresponds to an ambiguous textual occurrence of an entity $e_j$ mentioned in a sound recording that should be linked to the k-th musical work $w_j^k$ created by $e_j$;

- the knowledge base is a set of entities (i.e., music creators), which is denoted as $KB = \{e_j\}$.

Each entity $e_j = (u_j, s_j, W_j)$ is defined as a tuple including their registered name $u_j$, alias name $s_j$, and a collection of musical works $W_j$. The k-th musical work $w_j^k$ in the collection contains textual information and an audio file, in which the audio content can be represented as an audio feature vector $a_j^k$. A mention $m_i$ that appears in a sound recording is defined as a pair ($t_i$, $a_i$) composed of the textual feature vector $t_i$ characterising the mentioned name and the audio feature vector $a_i$ characterising the audio content of the sound recording. The objective is to match the mention $m_i$ with the most similar entity $ê(m_i)$ in the $KB$ according to the similarity of feature vectors.

Firstly, a subset of entities that are matching candidates is selected according to the audio similarity. This is defined as

$$C(m_i) = \{e_j \in KB \mid a_i \sim a_j^k\}$$

, where $a_i \sim a_j^k$ $a_i$ indicates that $a_i$ is close to $a_j^k$ in the audio vector space. The music entity matching system can determine the distance between the audio feature vectors, and return the candidates consisting of the entities that correspond to the smallest distances, such as the top-ten entities having the ten smallest distances. Additionally, or alternatively, the music entity matching system can return the candidates consisting of the entities corresponding to respective distances that are less than a distance similarity threshold. The threshold is a float number which ranges from zero to one. The threshold value can be pre-set by the music entity matching system, and/or adjusted via the user interface. In this example, distance between audio vectors is measured by cosine similarity, which is the dot product of the vectors divided by the product of their lengths.

Then the disambiguation of $m_i$ is formalised as finding the best textual similarity measure between $t_i$ and the textual feature vector of $u_j$ and $s_j$ (collectively denoted as $t_j$) of the entity candidates. This can be defined as: $ê(m_i) = argmax_{e_j \in C(mi)} sim(t_i, t_j)$. In this example, the textual similarity measure is calculated by a trained binary classifier, which indicates whether a pair of textual feature vectors is matched or not.

In the above example, the audio feature vectors are generated by an audio model, which is a deep convolutional neural network trained for audio-based music identification tasks. During the training process, we used an audio dataset consisting of different sound recordings of the same musical works. Given a low-level audio representation of a sound recording, the model was trained to identify which musical work it belongs to. After the training, output of the last fully connected layer of the model is used as a high-level representation of the input audio. In this example, the representation captures the harmonic progression of the audio, and is used as the audio feature vector.

In the above example, the textual feature vectors are generated by a pre-trained language model (e.g., BERT and GPT-2) which has demonstrated good performance on a wide range of NLP tasks. The pre-trained language model is a deep neural network with multiple transformer layers, pre-trained on large text corpora such as Wikipedia articles in an unsupervised manner. The embedding it generates captures the semantic and contextual understanding of the input textual data. Therefore, it is used as the textual feature vector.

In the above example, the trained binary classifier consists of a fully connected layer and a softmax output layer. During the training process, a text dataset consisting of different linguistic variations of the same name was used. Given the textual feature vectors of a pair of textual data, the binary classifier was trained to decide whether the input pair referred to the same name or not.

In the following discussion, an example digital medium environment is described that may employ the techniques described herein. Example implementation details and procedures are then described which may be performed in the example digital medium environment as well as in hardware environments, firmware, software, or a combination thereof.

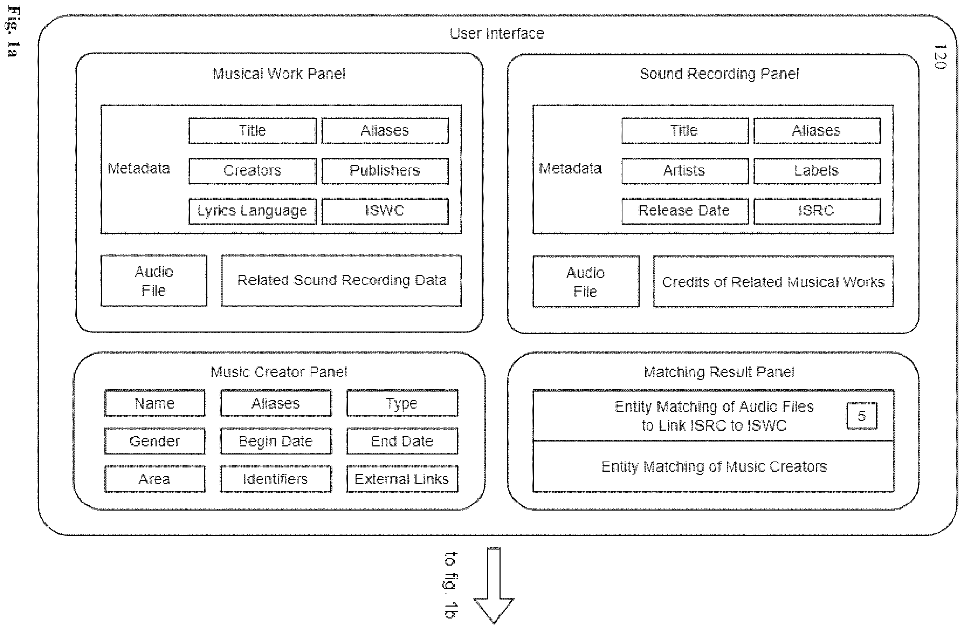

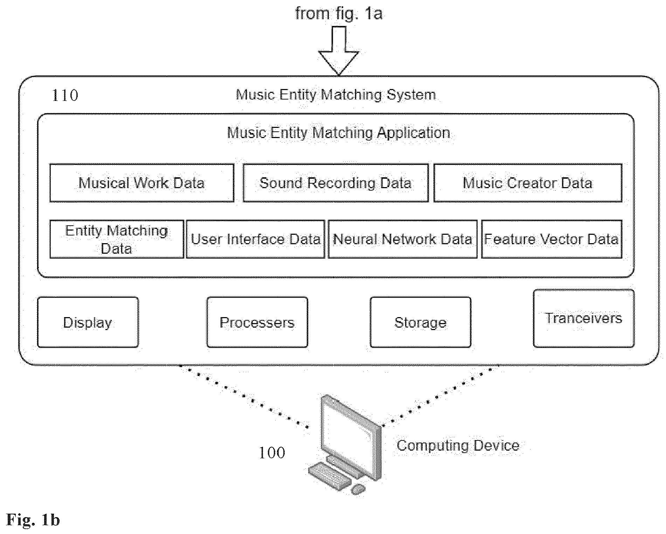

Figure 1a and 1b illustrate a digital medium environment in an example implementation that is operable to employ techniques described herein. As used herein, the term "digital medium environment" refers to the various computing devices and resources that can be utilised to implement the techniques described herein. The illustrated digital medium environment includes a computing device 100 depicted as a desktop computer, which is an example computing device 100. The computing device 100 can generally include any suitable type of computing device with memory and processor resources. The computing device 100 includes a music entity matching system 110. The music entity matching system 110 can generate a user interface 120 that is displayable on a display device of the computing device 100.

The user interface includes a music creator panel for registering and storing an entity record of a music creator. As shown in the example in Figure 1, the music creator panel can log and display an entity record including name, alias, type, gender, begin date, end date, area, identifiers, external links, and the like. The registered record is the single source of truth of the entity. Names mentioned in other records can be matched with an entity using the corresponding registered record.

The user interface also includes a musical work panel for registering and storing musical works associated with the registered music creator. The musical work panel includes:

  1) a metadata panel for logging and displaying general ownership and descriptive metadata of the musical work;

  2) an audio file panel for uploading the corresponding audio file of the musical work and for playing the audio file using any suitable representation such as a waveform; and

  3) a panel for logging and displaying information of related sound recordings if they exist.

In the example in Figure 1, the metadata panel of the musical works logs and displays the title, aliases, creators, publishers, lyrics language, ISWC of a musical work.

The user interface also includes a sound recording panel for receiving and storing sound recordings that are required to be linked with the underlying composition of a musical work. The sound recording panel includes:

  1) a metadata panel for logging and displaying general ownership and descriptive metadata of the sound recording;

  2) an audio file panel for uploading the corresponding audio file of the sound recording and for playing the audio file using any suitable representation such as a waveform; and

  3) a panel for logging and displaying information of credits of related musical works if they exist.

In this example, the metadata panel of the sound recording logs and displays the title, aliases, artists, labels, release date, and ISRC of a sound recording.

Based on the information received from the sound recording panel, the user interface can display a matching result panel for presenting the linked audio file registered via the musical work panel, and accordingly the matched entity record registered via the music creator panel. The matching result panel can instruct the music entity matching system 110 to return a specific number of musical works that are candidates linked to a given sound recording by setting the number or the similarity threshold. A user can select any of these music works, view the corresponding metadata, and play the audio files through a loudspeaker of the computing device 100.

In the example of Figure 1, ISWC numbers of the top-five musical works that is found to be similar to a sound recording with a ISRC number are presented as linking candidates of musical works in the matching result panel. From the entity records of music creators associated with the linking candidates of musical works, the matching result panel can present the music creator name mentioned in the sound recording and which entity it refers to. The matching result panel also allows users to manipulate the entity matching results, such as review, confirm, modify, delete, and the like.

The music entity matching system 110 includes a display 100, which can expose any suitable data used by or associated with the music entity matching system 110. For example, the display can display the user interface 120 mentioned above. The music entity matching system 110 also includes processors, which can be any suitable type of processor. The music entity matching system 110 can be implemented by executing the instructions, stored in storage, on the processors. The storage can be any suitable type of storage accessible by or included in the music entity matching system. The music entity matching system 110 also includes transceivers, which can be implemented to transmit and receive data using any suitable type and number of communication protocols.

The music entity matching system 110 also includes the music entity matching application that represents functionality configured to conduct the linking process of sound recordings to musical works and the matching process of music creator entity. The music entity matching application can be implemented as any type of module or component in any type of computing device. The music entity matching application can include or have access to any suitable data for music entity matching, including musical work data, sound recording data, music creator data, entity matching data, user interface data, neural network data (e.g., architecture definitions of a neural network, activation functions, and the like), and feature vector data (e.g., audio feature vector of an audio file, textual feature vector of a name, and the like).

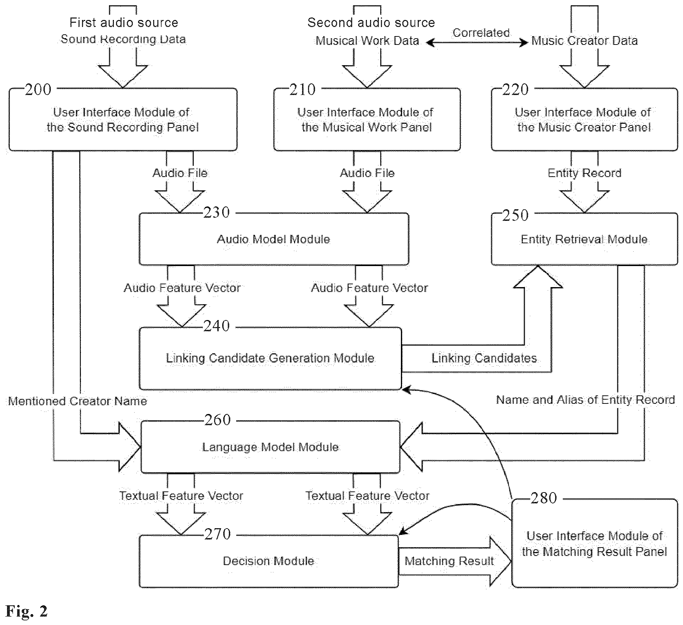

Figure 2 illustrates an example system usable for linking a first audio source to a second audio source. In this example a sound recording is linked to the underlying composition of a musical work using audio models, and accordingly matching the creator name mentioned in the sound recording with the entity record of the music creator associated with the linked musical work using language models in accordance with one or more aspects of the disclosure. In this implementation, the system includes user interface module of the sound recording panel 200, user interface module of the musical works panel 210, user interface module of the music creator panel 220, audio model module 230, linking candidate generation module 240, entity retrieval module 250, language model module 260, decision module 270, and a user interface module of the matching result panel 280.

These user interface modules 200, 210, 220 can be implemented as any type of module or component in any type of computing device 100. The system here is one example of the music entity matching system 110 in Figure 1 that can be constructed using these modules.

The user interface modules 200, 210, 220 can be implemented to generate and display a user interface. The user interface 120 in Figure 1 is an example of a user interface 120 generated by the user interface modules 200, 210, 220.

Via the user interface of the sound recording panel 200, the user interface module can receive and display sound recording data from a first audio source, including audio data such as an audio file, which should be linked to a musical work, and textual data such as a creator name mentioned in the credit, which should be matched to an entity of music creator.

Via the user interface of the musical work panel 210, the user interface module can receive and display musical work data from a second audio source, including audio data such as an audio file, which can be used to link sound recordings, and textual data such as metadata. Data of the music creators associated with the musical works can be received and displayed by the user interface module for the music creator panel 220 to form entity records of music creators, respectively.

The user interface modules 200, 210, 220 can provide audio data to the audio model module 230, textual data to the language model module 260, and entity record to the entity retrieval module 250. The intermediate and final matching results can be presented via the user interface of the matching result panel 280, which can also instruct the settings in the linking candidate generation module 240 and the decision module 270.

The audio model module 230 can be implemented to generate an audio feature vector representing the content of an audio file received from the user interface module. The audio model module 230 can include a trained audio-based neural network to generate audio feature vectors. In one example, the audio model module uses a trained convolutional neural network for audio-based music identification, which is targeted to a scenario where the audio files to be identified share a similar harmonic progression of a musical work. The audio model module 230 provides the generated audio feature vector to the linking candidate generation module 240.

The linking candidate generation module 240 is implemented to determine distances between audio feature vectors and then generate linking candidates based on these distances. The linking candidate generation module 240 receives the audio feature vector for the audio file from the sound recording data and calculate the distance between this vector to the audio feature vectors corresponding to a collection of musical works, respectively. The linking candidate generation module 240 will further determine the distances over the audio vector space and indicate a list of linking candidates, consisting of musical works that obtain similar music content to the given sound recordings. Here, the distances can be determined in any suitable way, such as by, ranking the distances, comparing the distances to a threshold, and the like, according to the instruction given by the user interface module of the matching result panel 280. The linking candidate generation module 240 will provide the linking candidates to the entity retrieval module 250.

According to the linking candidates provided by the linking candidate generation module 240, the entity retrieval module 250 retrieves their corresponding entity records of music creators to obtain the respective textual data such as names and aliases of the music creators. The entity retrieval module 250 will provide the textual data to the language model module 260.

The language model module 260 is implemented to generate textual feature vectors for representing the semantic and contextual understanding of the mentioned name received from the user interface module of the sound recording panel 200 and the name and alias received from the entity retrieval module 250. The language model module 260 can include a trained neural network for NLP tasks to generate textual feature vectors. In one example, the language model module 260 uses a trained deep neural network with the transformer architecture. The language model module 260 will provide the generated textual feature vector to the decision module 270.

The decision module 270 can be implemented to perform a binary classification on pairs of textual feature vectors in order to determine which music creator entity the name mentioned in the sound recording data it refers to. Each pair consists of the textual feature vector corresponding to the mentioned creator name from the sound recording data and the textual feature vector corresponding to the respective names and aliases from the entity records of music creators, whose associated musical works are in the list of linking candidates. The decision module 270 will feed the pairs into a trained binary classifier which indicates a matching degree of the mentioned creator name and the music creator entity in each pair. In one example, the decision module 270 uses a trained binary classifier consisting of a fully connected layer and a softmax output layer. A list of music creator entities with a sorted matching degree from high to low can form the matching result, which are presented in the user interface module of the matching result panel 280.

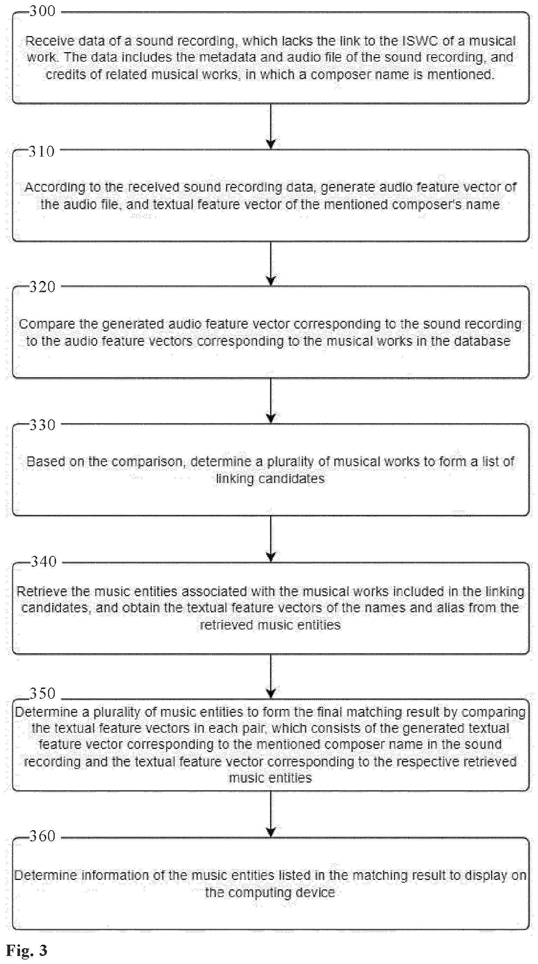

Figure 3 illustrates a flow diagram depicting an example procedure in accordance with matching a composer name mentioned in a sound recording from a first audio source to the real-world entity of the music creator.

The first step 300 of the procedure is receiving data of a sound recording, which lacks the link to the ISWC of a musical work. The data includes the metadata and audio file of the sound recording, and credits of related musical works, in which a composer name is mentioned.

The next step 310 is to generate feature vectors for the following matching steps. Audio feature vector of the audio file of the sound recording is generated using an audio model, which is also used to generate audio feature vectors corresponding to the musical works in the database. Textual feature vector of the mentioned composer's name is generated using a language model, which is also used to generate textual feature vectors corresponding to the music creator entities in the database.

The next step 320 is to compare the generated audio feature vector corresponding to the sound recording from the first audio source to the audio feature vectors corresponding to the musical work data of the second audio source, respectively. Based on the comparison, the next step 330 is to determine a plurality of musical works to form a list of linking candidates, i.e., musical works that are similar to the sound recording in view of the harmonic progression in their audio contents.

The next step 340 is to retrieve the music entities which are associated with the musical works included in the linking candidates. Accordingly, textual feature vectors of the names and alias from the retrieved music entities are obtained.

The next step 350 is to determine if a pair of textual feature vectors is a match using a binary classifier. Each pair consists of the generated textual feature vector corresponding to the mentioned composer name in the sound recording and the textual feature vector corresponding to the respective retrieved music entities. A list of matched music entities forms the final matching result.

The last step 360 is to determine which information, related to the music entities listed in the matching result, to display on the computing device.

Aspects of the procedures illustrated in Figure 3 may be implemented in hardware, firmware, software, or a combination thereof. The procedure is illustrated as a set of blocks that specify operations performed by one or more devices and are not necessarily limited to the orders shown for performing the operations by the respective blocks. The procedure may be performed in a digital medium environment by a suitably configured computing device, such as the computing device described with reference to Figure 1 that makes use of a music entity matching system, such as the system described with reference to Figure 2.

A music entity matching system 110 implementing procedures illustrated in Figure 3 may be an independent application that has been installed on the computing device, a service hosted by a service provider that is accessible by the computing device, a plug-in module to the computing device, or combinations thereof.

The basic invention described above can address the entity matching problem in the following scenario for example. The musical work "I Will Always Love You" with an ISWC number of T-070.919.097-5 was created in 1973 by Dolly Parton who has an ISNI number of 0000 0000 7357 8525. Since then, many artists covered the song and produced sound recordings with different ISRC numbers. One of the most commercially successful sound recordings was performed by Whitney Houston for the 1992 film "The Bodyguard" with an ISRC number of USAR19200110. This invention can link the ISRC to the ISWC by measuring the similarity of the proposed audio feature vectors corresponding to the audio files of the sound recording and the musical work. Then the creator name of "Dolly Parton" mentioned in the credit of the sound recording can be matched with the real-world entity of Dolly Parton with the ISNI number using the proposed language model. This guarantees that the publishing royalties generated from the cover songs are correctly paid to the creator of the original musical work.

In case a sound recording obtains a high audio feature vector similarity with a musical work, but there is no name mentioned in the credits of the sound recording for matching, or no matched entities returned from the language model, users can manually review the existing results and make a request of adding the music creator entities to the credits of the sound recording via the user interface of the matching result panel.

The system and method described herein can also, in another embodiment of the invention, be applied to matching entities of music rights holders between two music catalogues. A similar procedure as described with reference to figure 3 above can be used for matching musical entities of musical audio recording from two different music catalogues, each comprising metadata related to the musical audio recordings.

Music rights holders can be any artist, songwriter, record label, music publisher, or any other holder of any rights in any sound recording and musical work. A music catalogue includes a collection of sound recordings or musical works with metadata, audio files, and other related information. Given an audio file from one music catalogue, its audio feature vector is respectively compared with the audio feature vectors corresponding to the audio files from the other music catalogue. According to the comparison, linking candidates are generated to obtain the corresponding names of music rights holders. Given the name of the music rights holder of the given audio file from one music catalogue, its textual feature vector is respectively paired with the textual feature vectors corresponding to the obtained names of music rights holders from the other music catalogue. Using the trained binary classifier, each pair is determined to be a match that refers to the same entity.

**Claims**

1. A method for matching music related entities of musical audio recordings received from a first and a second audio source, where the musical audio recordings comprise metadata and corresponding audio files, the method is executed in a music entity matching system (110) running on a computing device (100), the method comprises:

   - receiving (300) the musical audio recordings from the first and the second audio source and extracting audio data from the corresponding audio files, and creator name data from the metadata,
   - generating (310), in an audio model module (230), audio feature vectors of the audio files of the first and second audio source, and generating, in a language model module (260), textual feature vectors of the creator name data,
   - comparing (320), in a linking candidate generation module (240), the generated audio feature vectors of the first and second audio source,
   - determining (330), based on similarity comparison of audio feature vectors generated from the first and second audio source, linking candidates with similarity to be included in a list of musical audio recordings,
   - retrieving (340), in an entity retrieval module (250), music entities associated with the musical audio recordings from the metadata of the linking candidates,
   - comparing, in a decision module (270), textual feature vectors of each pair of linking candidates and from this, determining (350) a plurality of matching entities to form a final matching result of the right holders of musical audio recordings,
   - presenting (360), on a user interface (120), information of the music entities of the final matching result of the right holders of musical audio recordings received from the first and a second audio source.

2. The method according to claim 1, where the musical audio recording received from the first audio source is a derivative version of an original musical work, and the audio recording received from the second audio source is the original musical work.

3. The method according to claim 1, where the musical audio recording received from the first audio source is from a first music catalogue, and the musical audio recording received from the second audio source is from a second music catalogue, where the music catalogues comprise metadata related to the musical audio recordings.

4. The method according to any of the previous claims, where the entities of the textual feature vectors forming the final matching result comprise creator name data and real-world entities of creators and are determined as a match by using a binary classifier.

5. The method according to any of the previous claims, where the audio feature vectors are generated by a deep neural network trained for audio-based music identification.

6. The method according to any of the previous claims, where the textual feature vectors are generated by a deep neural network-based language model.

7. A music entity matching system (110) for matching music related entities of musical audio recordings received from a first and a second audio source, where the musical audio recordings comprise metadata and corresponding audio files, the system comprises a computing device (100) adapted for performing the entity matching when executing a music entity matching program, the system further comprises:

- user interface modules (200, 210, 220) for receiving the musical audio recordings from the first and the second audio source and extracting audio data from the corresponding audio files, and creator name data from the metadata,
- an audio model module (230) generating audio feature vectors of the audio files of the first and second audio source, and a language model module (260) generating textual feature vectors of the creator name data from the metadata,
- a linking candidate generation module (240) for performing similarity comparison of the generated audio feature vectors of the first and second audio source, and determining, based on the similarity comparison of audio feature vectors generated from the first and second audio source, linking candidates with similarity to be included in a list of musical audio recordings,
- an entity retrieval module (250) for retrieving music entities associated with the musical audio recordings from the metadata of the linking candidates,
- a decision module (270) for comparing textual feature vectors of each pair of linking candidates and from this, determining a plurality of matching entities to form a final matching result of the rights holders of musical audio recordings,
- a user interface module (280) connected to a on a user interface (120) for presenting information of the music entities of the final matching result of musical audio recordings received from the first and a second audio source.

8. A computer program product that when executed by a computing device (100) performs the method according to claims 1 to 6 for matching music related entities of musical audio recordings received from a first and a second audio source, where the musical audio recordings comprise metadata and corresponding audio files.

120

User Interface

**Sound Recording Panel**

Metadata

| Title | Aliases |
| Artists | Labels |
| Release Date | ISRC |

Audio File

Credits of Related Musical Works

**Matching Result Panel**

Entity Matching of Audio Files to Link ISRC to ISWC | 5

Entity Matching of Music Creators

**Musical Work Panel**

Metadata

| Title | Aliases |
| Creators | Publishers |
| Lyrics Language | ISWC |

Audio File

Related Sound Recording Data

**Music Creator Panel**

| Name | Aliases | Type |
| Gender | Begin Date | End Date |
| Area | Identifiers | External Links |

to fig. 1b

**Fig. 1a**

11

from fig. 1a

## Music Entity Matching System
110

### Music Entity Matching Application

| Musical Work Data | Sound Recording Data | Music Creator Data |
|---|---|---|

| Entity Matching Data | User Interface Data | Neural Network Data | Feature Vector Data |
|---|---|---|---|

| Display | Processers | Storage | Tranceivers |
|---|---|---|---|

Computing Device

100

**Fig. 1b**

Fig. 2

300

Receive data of a sound recording, which lacks the link to the ISWC of a musical work. The data includes the metadata and audio file of the sound recording, and credits of related musical works, in which a composer name is mentioned.

310

According to the received sound recording data, generate audio feature vector of the audio file, and textual feature vector of the mentioned composer's name

320

Compare the generated audio feature vector corresponding to the sound recording to the audio feature vectors corresponding to the musical works in the database

330

Based on the comparison, determine a plurality of musical works to form a list of linking candidates

340

Retrieve the music entities associated with the musical works included in the linking candidates, and obtain the textual feature vectors of the names and alias from the retrieved music entities

350

Determine a plurality of music entities to form the final matching result by comparing the textual feature vectors in each pair, which consists of the generated textual feature vector corresponding to the mentioned composer name in the sound recording and the textual feature vector corresponding to the respective retrieved music entities

360

Determine information of the music entities listed in the matching result to display on the computing device

Fig. 3

Europäisches
Patentamt

European
Patent Office

Office européen
des brevets

# EUROPEAN SEARCH REPORT

Application Number

EP 22 19 4930

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2016/102738 A1 (NOKIA TECHNOLOGIES OY [FI]) 30 June 2016 (2016-06-30) <br> * page 1 - page 48 * <br> * claims 1-34 * <br> * figures 6,12 * | 1-8 | INV. <br> G06F16/683 |
| A | Oramas S ET AL: "Transactions of the International Society for Music Information Retrieval Multimodal Deep Learning for Music Genre Classification", <br> , <br> 2 January 2018 (2018-01-02), pages 1-18, XP093020723, <br> Retrieved from the Internet: <br> URL:https://ccrma.stanford.edu/~urinieto/MARL/publications/TISMIR2018.pdf <br> [retrieved on 2023-02-03] <br> * the whole document * | 1-8 | |
| A | US 7 678 984 B1 (LAMERE PAUL B [US]) 16 March 2010 (2010-03-16) <br> * the whole document * | 1-8 | |
| A | EP 3 961 428 A1 (SYMPHONIC DISTRIB INC [US]) 2 March 2022 (2022-03-02) <br> * paragraph [0003] - paragraph [0104] * | 1-8 | TECHNICAL FIELDS SEARCHED (IPC) <br><br> G06F <br> G06V <br> G10H |
| A | US 2010/023328 A1 (GRIFFIN JR PAUL P [US] ET AL) 28 January 2010 (2010-01-28) <br> * paragraph [0004] - paragraph [0022] * | 1-8 | |

The present search report has been drawn up for all claims

| Place of search | Date of completion of the search | Examiner |
|---|---|---|
| The Hague | 3 February 2023 | Warry, Lawrence |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 336 381 A1

**ANNEX TO THE EUROPEAN SEARCH REPORT
ON EUROPEAN PATENT APPLICATION NO.**

EP 22 19 4930

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2023

| Patent document cited in search report | | Publication date | Patent family member(s) | | Publication date |
|---|---|---|---|---|---|
| WO 2016102738 | A1 | 30-06-2016 | NONE | | |
| US 7678984 | B1 | 16-03-2010 | NONE | | |
| EP 3961428 | A1 | 02-03-2022 | BR 102021017284 | A2 | 15-03-2022 |
| | | | CO 2021005565 | A1 | 20-05-2022 |
| | | | EP 3961428 | A1 | 02-03-2022 |
| | | | GB 2598436 | A | 02-03-2022 |
| | | | US 10963507 | B1 | 30-03-2021 |
| | | | US 11068535 | B1 | 20-07-2021 |
| | | | US 2022067086 | A1 | 03-03-2022 |
| | | | WO 2022050985 | A1 | 10-03-2022 |
| US 2010023328 | A1 | 28-01-2010 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6990453 B2

**Non-patent literature cited in the description**

- **KATAKIS, N. ; VIKATOS, P.** Entity Linking of Sound Recordings and Compositions with Pre-trained Language Models. *Proceedings of the 17th International Conference on Web Information Systems and Technologies (WEBIST 2021),* 474-481

- **BARLAUG, N. ; GULLA, J.A.** Neural networks for entity matching: A survey. *ACM Transactions on Knowledge Discovery from Data (TKDD),* 2021, vol. 15 (3), 1-37
- **ADJALI, OMAR et al.** Multimodal entity linking for tweets. *European Conference on Information Retrieval. Springer, Cham,* 2020